# EUROPEAN PATENT SPECIFICATION

(11) **EP 2 587 189 B1**
(45) Date of publication and mention of the grant of the patent: **08.07.2020**
(21) Application number: 12161479.6
(22) Date of filing: 27.03.2012
(51) Int. Cl.: F25B 1/10, F25B 49/02, F25B 13/00, F25B 47/02

(54) **Air conditioner**
Klimaanlage
Climatiseur

(30) Priority: 27.10.2011 KR 20110110390
(43) Date of publication of application: 01.05.2013
(73) Proprietor: LG Electronics Inc., Yeongdeungpo-gu Seoul, 07336 (KR)
(72) Inventor: Choi, Bongsoo, 153-802 Seoul (KR)
(74) Representative: Vossius & Partner Patentanwälte Rechtsanwälte mbB

(56) References cited:
- EP-A1- 2 088 388
- EP-A2- 1 598 616
- EP-A2- 1 669 695
- WO-A1-2006/118573
- WO-A1-2010/041453
- US-A1- 2005 160 761

## Description

The present disclosure relates to an air conditioner.

Air conditioners include a refrigerant cycle of a compressor, a condenser, an expansion mechanism, and an evaporator to heat/cool an indoor space or purify air, thereby providing comfort indoor environment to users.

Air conditioners are classified into single-type air conditioners in which a single indoor unit is connected to a single outdoor unit, and multi-type air conditioners in which indoor units are connected to one or more outdoor units to provide the effect of a plurality of air conditioners.

The one or more outdoor units include a compressing unit, an outdoor heat exchanger, an outdoor expansion mechanism, and an excessive cooler. The compressing unit may include a plurality of compressors. The number of operating compressors may vary according to indoor loads. One compressor may operate under a small load, and a plurality of compressors may operate under a great load.

When one of the operating compressors is stopped, the inside of the stopped compressor is maintained at high pressure. In this state, the inner pressure of the stopped compressor should be decreased in order to restart the stopped compressor. That is, discharge and introduction pressures of the stopped compressor should balance each other, otherwise, the stopped compressor fails to restart.

Typical air conditioners stop an operating compressor to balance the high and lower pressures of all compressors with each other in order to decrease the inner pressure of a stopped compressor. As such, since the operating compressor is stopped in order to decrease the inner pressure of the stopped compressor, a number of compressors are stopped, and thus, an indoor cooling or heating operation cannot be performed.

In addition, when the stopped compressors restart, a large amount of time is required to reach a certain level of cycle performance. Furthermore, the compressors restarting from a pressure balance state make a noise.

EP 2 088 388 A1 discloses a heat pump system comprising a first and second hermetic compressor, a condenser, a first electronically controlled expansion valve and an evaporator, wherein the first compressor and the second compressor are connected in series via a first conduit segment, such that the compression is a two-stage compression when the first and second compressor are both operated.

EP 1 669 695 A2 describes an air conditioner incorporating cutoff valves mounted in a plurality of indoor units, respectively, for allowing refrigerant discharged from an outdoor heat exchanger to be introduced into one or more indoor units that are in operation.

The present invention provides an air conditioner according to claim 1. Preferred embodiments are defined in the dependent claims.

In one embodiment, an air conditioner includes an indoor device and an outdoor device, wherein the outdoor device includes: a plurality of compressors; a plurality of bypass tubes connected to the compressors and functioning as bypasses for refrigerant compressed in the compressors; and a plurality of bypass valves provided to the bypass tubes, respectively, wherein, in a state where at least one part of the compressors are stopped during operations of the compressors, when an operation condition of the stopped compressor is satisfied, the bypass valve corresponding to the stopped compressor is opened.

The details of one or more embodiments are set forth in the accompanying drawings and the description below. Other features will be apparent from the description and drawings, and from the claims.
Fig. 1 is a schematic view illustrating a refrigerant cycle of an air conditioner according to an embodiment.
Fig. 2 is a schematic view illustrating refrigerant flow in a normal mode of an air conditioner according to an embodiment.
Fig. 3 is a schematic view illustrating refrigerant flow in an injection mode of an air conditioner according to a current embodiment.
Fig. 4 is a flowchart illustrating a method of controlling an air conditioner according to an embodiment.
Fig. 5 is a schematic view illustrating a control cycle for restarting a stopped part of compressors according to an embodiment.
Fig. 6 is a schematic view illustrating a control cycle for restarting compressors that are stopped all, according to an embodiment.

Hereinafter, exemplary embodiments of the present disclosure will be described with reference to the accompanying drawings. Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure.

Also, in the description of embodiments, terms such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

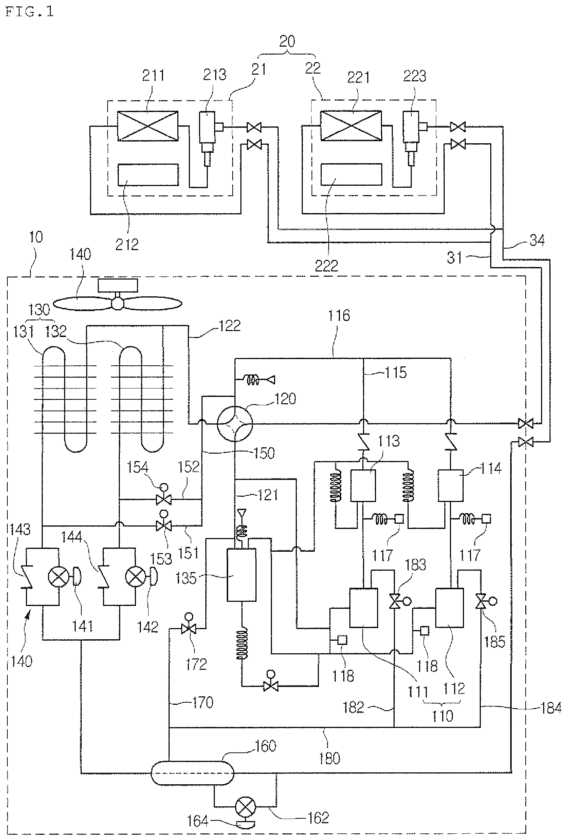

Fig. 1 is a schematic view illustrating a refrigerant cycle of an air conditioner according to an embodiment.

Referring to Fig. 1, an air conditioner according to the current embodiment may include an outdoor device 10 and an indoor device unit 20 connected to the outdoor device 10 through refrigerant tubes.

The indoor device unit 20 may include a plurality of indoor devices 21 and 22. Although one outdoor device is connected to two indoor devices herein for convenience in description, the present disclosure is not limited to the number of outdoor devices and indoor devices. That is, two or more indoor devices may be connected to two or more outdoor devices, or one indoor device may be connected to one outdoor device.

The outdoor device 10 includes a compressing unit 110 for compressing refrigerant, and an outdoor heat exchanger 130 in which outdoor air exchanges heat with the refrigerant.

The compressing unit 110 may include one or more compressors. For example, the compressing unit 110 may include a plurality of compressors 111 and 112. The compressors 111 and 112 may include an inverter compressor (also denoted by 111) having variable capacity, and a constant-speed compressor (also denoted by 112). Alternatively, the compressors 111 and 112 all may be inverter compressors or constant-speed compressors. The compressors 111 and 112 may be arrayed in parallel. At least one part of the compressors 111 and 112 may operate according to capacity of the indoor device unit 1. In Fig. 1, the compressor 111 is a constant-speed compressor, and the compressor 112 is an inverter compressor.

Discharge tubes of the compressors 111 and 112 include individual tubes 115 and a join tube 116. That is, the individual tubes 115 of the compressors 111 and 112 join the join tube 116. The individual tubes 115 may be provided with oil separators 113 and 114 that separate oil from the refrigerant. Oil separated from the refrigerant by the oil separators 113 and 114 may be recovered to an accumulator 135, or the compressors 111 and 112.

Tubes for connecting the oil separators 113 and 114 to the compressors 111 and 112 are provided with high pressure sensors 117 for sensing discharge pressure of the compressors 111 and 112. Introduction tubes of the compressors 111 and 112 are provided with low pressure sensors 118 for sensing introduction pressure of the compressors 111 and 112.

The join tube 116 is connected to a four-way valve 120 that switches refrigerant tubes. The four-way valve 120 is connected to the outdoor heat exchanger 130 through a connecting tube 122. The four-way valve 120 may be connected to the accumulator 135 that may be connected to the compressing unit 110.

The outdoor heat exchanger 130 includes a first heat exchange part 131 and a second heat exchange part 132. The first and second heat exchange parts 131 and 132 may be separate heat exchangers, or a single outdoor heat exchanger may be divided into the first and second heat exchange parts 131 and 132 according to refrigerant flow. The first and second heat exchange parts 131 and 132 may be disposed horizontally or vertically. The first and second heat exchange parts 131 and 132 may be different or the same in heat exchange capacity.

In the outdoor heat exchanger 130, the refrigerant may exchange heat with outdoor air blown by a fan motor assembly 140 that includes an outdoor fan and a fan motor. The fan motor assembly 140 may be provided in plurality. One fan motor assembly 140 is exemplified in Fig. 1.

The outdoor device 10 includes an outdoor expansion mechanism 140. The outdoor expansion mechanism 140 does not expand the refrigerant discharged from the outdoor heat exchanger 130, and expands the refrigerant entering the outdoor heat exchanger 130.

The outdoor expansion mechanism 140 includes a first outdoor expansion valve 141 connected to the first heat exchange part 131, and a second outdoor expansion valve 142 connected to the second heat exchange part 132. A first check valve 143 is connected in parallel to the first outdoor expansion valve 141, and a second check valve 144 is connected in parallel to the second outdoor expansion valve 142.

The refrigerant expanded by the first outdoor expansion valve 141 flows to the first heat exchange part 131. The refrigerant expanded by the second outdoor expansion valve 142 flows to the second heat exchange part 132. For example, the first and second outdoor expansion valves 141 and 142 may be electronic expansion valves (EEVs).

A tube unit for defrosting is connected to the join tube 116. The tube unit for defrosting is connected to tubes connecting the first and second heat exchange parts 131 and 132 to the first and second outdoor expansion valves 141 and 142. The tube unit may includes: a common tube 150; and a first individual tube 151 and a second individual tube 152, which branch from the common tube 150. The first individual tube 151 is connected to a tube connecting the first heat exchange part 131 to the first outdoor expansion valve 141, and the second individual tube 152 is connected to a tube connecting the second heat exchange part 141 to the second outdoor expansion valve 142.

The first individual tube 151 is provided with a first defrosting valve 153. The second individual tube 152 is provided with a second defrosting valve 154. For example, the first and second defrosting valves 153 and 154 may be solenoid valves capable of adjusting flow rate. For another example, the tube unit may include first and second individual tubes without a common tube.

The first and second defrosting valves 153 and 154 may be opened in a heating operation. At this point, the high temperature refrigerant compressed by the compressing unit 110 may be introduced to the first and second individual tubes 151 and 152. Then, the high temperature refrigerant defrosts the outdoor heat exchanger 130.

The outdoor expansion mechanism 140 may be connected to an excessive cooler 160 through a liquid tube 34. The liquid tube 34 is connected to an excessive cooling tube 162 to return the refrigerant discharged from the excessive cooler 160, to the excessive cooler 160. Since the excessive cooler 160 may have well-known structure and tube connection configuration, a description thereof will be omitted. The excessive cooling tube 162 is provided with an excessive cooling valve 164 to adjust a flow rate of the refrigerant and expand the refrigerant. The excessive cooling valve 164 adjusts a flow rate of the refrigerant flowing to a first refrigerant tube 170 to be described later.

Since the excessive cooler 160, the excessive cooling tube 162, and the excessive cooling valve 164 excessively cool the refrigerant, a unit thereof may be referred to as an excessive cooling unit.

The excessive cooler 160 is connected to the first refrigerant tube 170 communicating with the excessive cooling tube 162 and the accumulator 135. For example, the first refrigerant tube 170 may be connected to a tube 121 connecting the four-way valve 120 to the accumulator 135, or be directly connected to the accumulator 135. The first refrigerant tube 170 is provided with a first valve 172. For example, the first valve 172 may be a solenoid valve.

Although the refrigerant is introduced from the first refrigerant tube 170 to the accumulator 135, the first refrigerant tube 170 may be connected to an inlet tube of the compressing unit 110. That is, the excessive cooling unit communicates with the introduction side of the compressing unit 110 through the first refrigerant tube 170.

The first refrigerant tube 170 is connected to a second refrigerant tube. The second refrigerant tube includes: a common tube 180; and a first bypass tube 182 and a second bypass tube 184, which branch from the common tube 180. The first bypass tube 182 is connected to the compressor 111. The second bypass tube 184 is connected to the compressor 112. Alternatively, the first and second bypass tubes 182 and 184 may be connected to the first refrigerant tube 170. Each of the compressors 111 and 112 may include a plurality of compressing chambers to perform a multi-stage compressing operation.

Each of the first and second bypass tubes 182 and 184 may communicate with a specific one of the compressing chambers, that is, with a compressing chamber receiving the refrigerant compressed one or more times. For example, when a compressor includes two compressing chambers (refrigerant compressed in the first compressing chamber is compressed in the second one), the first and second bypass tubes 182 and 184 may be connected to the second compressing chamber; and when a compressor includes three or more compressing chambers, the first and second bypass tubes 182 and 184 may be connected to one of the second and subsequent compressing chambers. In this case, the introduction side of the compressor is a low pressure region, the discharge side thereof is a high pressure region, and the first and second bypass tubes 182 and 184 are connected to a middle pressure region of the compressor.

The first bypass tube 182 is provided with a first bypass valve 183. The second bypass tube 184 is provided with a second bypass valve 185. For example, the first and second bypass valves 183 and 185 may be solenoid valves. The first and second bypass valves 183 and 185 may be referred to as second valves with respect to the first valve 172.

The outdoor device 10 may be connected to the indoor device unit 20 through a gas tube 31 and the liquid tube 34. The gas tube 31 may be connected to the four-way valve 120, and the liquid tube 34 may be connected to the outdoor expansion mechanism 140. That is, a tube connected to both sides of the excessive cooler 160 may be referred to as the liquid tube 34.

The indoor device 21 may include an indoor heat exchanger 211, an indoor fan 212, and an indoor expansion mechanism 213. The indoor device 22 may include an indoor heat exchanger 221, an indoor fan 222, and an indoor expansion mechanism 223. For example, the indoor expansion mechanisms 213 and 223 may be electronic expansion valves (EEVs).

Hereinafter, refrigerant flow of an air conditioner will now be described according to an embodiment.

Operation modes of an air conditioner according to the current embodiment may include a normal mode (a normal cooling mode, a normal heating mode, or a third refrigerant flow mode), an injection mode (or a first refrigerant flow mode), and a refrigerant bypass mode (a second refrigerant flow mode). These modes may be classified according to flow directions of refrigerant.

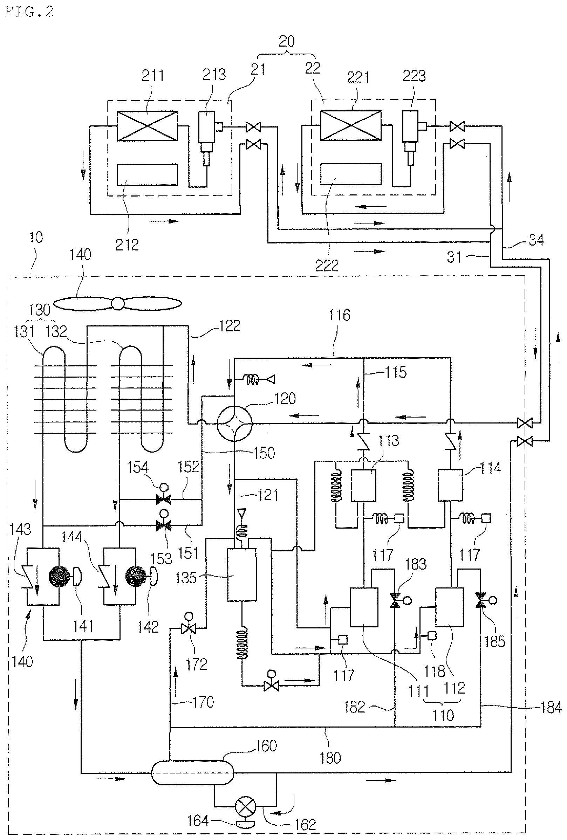

Fig. 2 is a schematic view illustrating refrigerant flow in the normal mode of an air conditioner according to the current embodiment. For example, the normal mode may be a cooling mode.

Referring to Fig. 2, when the air conditioner operates in the normal cooling mode, the refrigerant in a high temperature/high pressure state discharged from the compressing unit 110 of the outdoor device 10, flows to the outdoor heat exchanger 130 according to a passage control operation of the four-way valve 120.

Then, the refrigerant is condensed by the first and second heat exchange parts 131 and 132. At this point, the first and second defrosting valves 153 and 154, and the first and second outdoor expansion valves 141 and 142 are closed.

Accordingly, the refrigerant discharged from the compressing unit 110 is prevented from passing through the first and second individual tubes 151 and 152. Then, the refrigerant discharged from the first and second heat exchange parts 131 and 132 passes through the first and second check valves 143 and 144.

Then, the condensed refrigerant flows through the excessive cooler 160. A portion of the refrigerant discharged from the excessive cooler 160 flows through the excessive cooling tube 162, and is expanded by the excessive cooling valve 164. Then, the refrigerant expanded by the excessive cooling valve 164 is introduced to the excessive cooler 160 to exchange heat with the condensed refrigerant flowing along the liquid tube 34.

The temperature and pressure of the refrigerant flowing through the excessive cooling tube 162 decrease when passing through the excessive cooling valve 164. Accordingly, the temperature of the refrigerant passing through the excessive cooling valve 164 is lower than that of the refrigerant flowing through the liquid tube 34. Thus, the condensed refrigerant is excessively cooled, passing through the excessive cooler 160. Accordingly, the temperature of the refrigerant introduced to the indoor heat exchangers 211 and 221 is low, thus increasing the amount of heat absorbed from indoor air, and improving entire cooling performance of the air conditioner.

Also when the air conditioner operates in the normal heating mode, the refrigerant can be excessively cooled, and then, is introduced to the outdoor heat exchanger 130. Accordingly, heating performance of the air conditioner can be improved.

The refrigerant discharged from the excessive cooling tube 162 sequentially flows to the excessive cooler 160 and the first refrigerant tube 170. At this point, the first valve 172 is opened, and the first and second bypass valves 183 and 185 are closed, which is the same as that in the normal heating mode. Thus, the refrigerant introduced to the excessive cooling tube 162 is introduced to the accumulator 135, without flowing to the compressors 111 and 112.

Meanwhile, the refrigerant flowing through the liquid tube 34 is introduced to the indoor devices 21 and 22. The refrigerant introduced to the indoor devices 21 and 22 is expanded by the indoor expansion mechanisms 213 and 223, and then, is introduced to the indoor heat exchangers 211 and 221. The refrigerant is evaporated in the indoor heat exchangers 211 and 221, and then, flows to the outdoor device 10 through the gas tube 31. Next, the refrigerant is introduced to the accumulator 135 through the four-way valve 120. Vapor refrigerant of the refrigerant introduced to the accumulator 135 is introduced to the compressing unit 110.

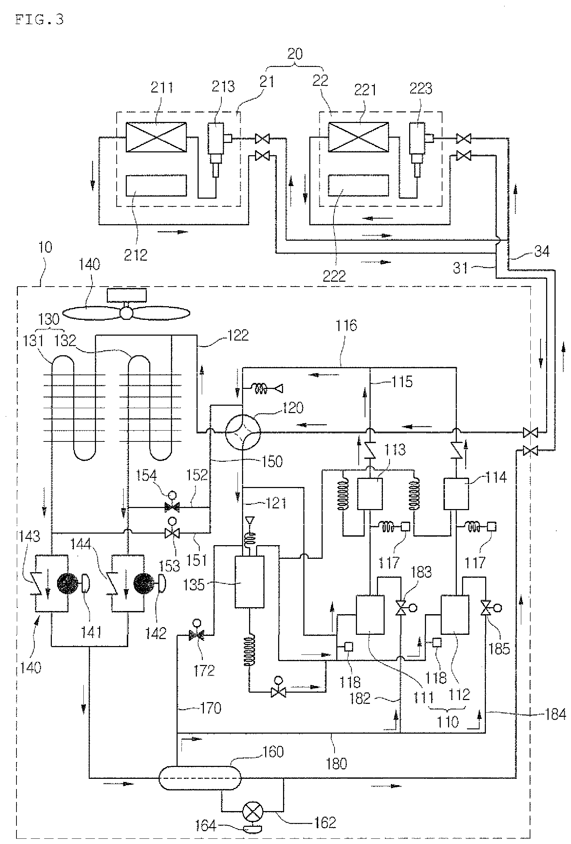

Fig. 3 is a schematic view illustrating refrigerant flow in the injection mode of an air conditioner according to the current embodiment. Particularly, Fig. 3 illustrates refrigerant flow when an air conditioner is switched from a cooling mode to the injection mode.

Referring to Fig. 3, the injection mode of the air conditioner is substantially the same as the normal cooling mode, except for operations of the first valve 172 and the first and second bypass valves 183 and 185. Thus, the difference between the injection mode and the normal cooling mode will now be described.

While the air conditioner operates in the normal cooling mode, when the difference between high and low pressures of the compressing unit 110 is equal to or higher than a reference pressure (the high pressure increases or the lower pressure decreases), or a compression ratio (a ratio of high pressure to lower pressure) is equal to or smaller than a reference compression ratio, the first valve 172 is closed, and the first and second bypass valves 183 and 185 are opened.

Then, the refrigerant discharged from the excessive cooler 160 to the first refrigerant tube 170 is injected to the compressors 111 and 112 through the common tube 180 and the first and second bypass tubes 182 and 184. At this point, the pressure of the refrigerant injected to the compressors 111 and 112 is between a discharge pressure of the compressors 111 and 112 and an introduction pressure thereof.

Since the refrigerant injected to the compressors 111 and 112 has middle pressure, the difference of high and low pressures of the compressors 111 and 112 is decreased, and the flow rate of the refrigerant discharged from the compressors 111 and 112 to a condenser (the outdoor heat exchanger 130 in the cooling mode, and the indoor heat exchangers 211 and 221 in the heating mode) is increased, thereby improving cycle performance.

While the air conditioner operates in the injection mode, when the difference between high and low pressures of the compressing unit 110 is lower than the reference pressure, or the compression ratio (a ratio of high pressure to lower pressure) is greater than the reference compression ratio, the first valve 172 is opened, and the first and second bypass valves 183 and 185 are closed. Accordingly, the air conditioner operates in the normal cooling mode.

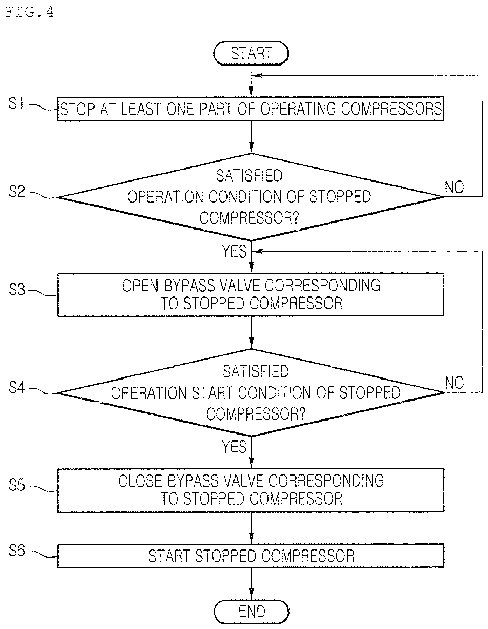

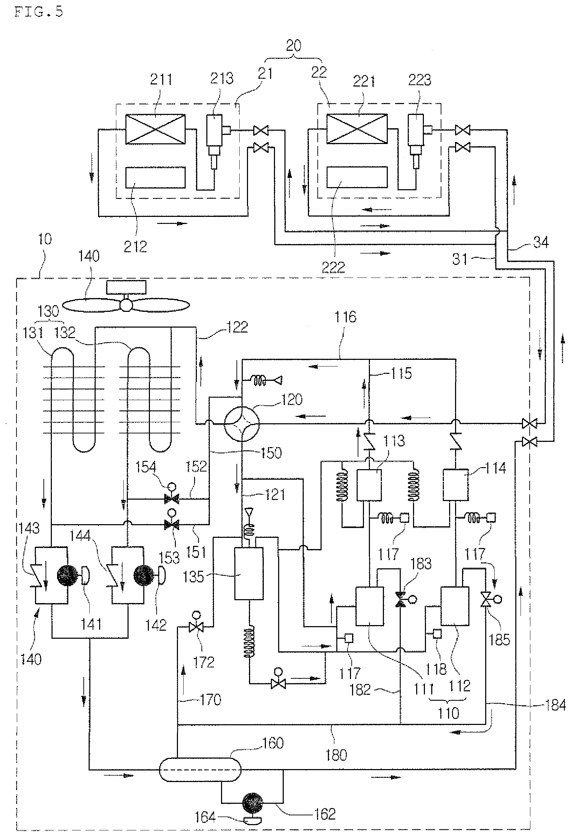

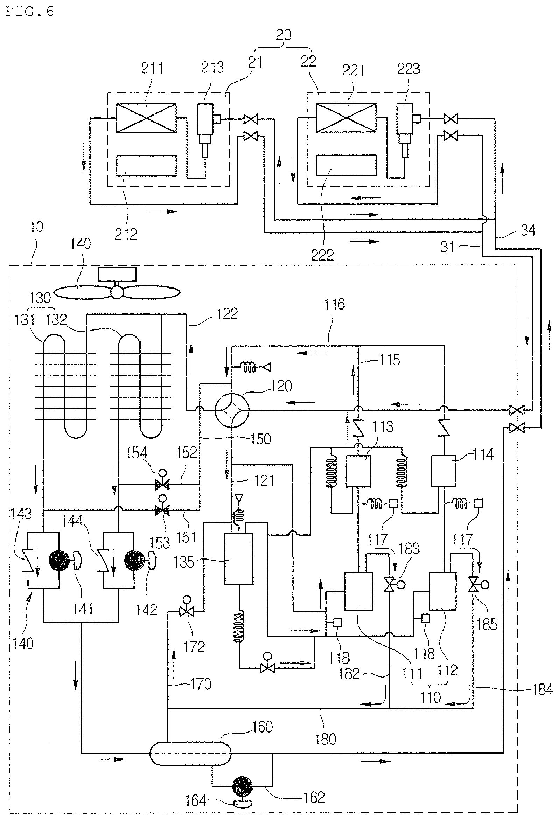

Fig. 4 is a flowchart illustrating a method of controlling an air conditioner according to the current embodiment. Fig. 5 is a schematic view illustrating a control cycle for restarting a stopped part of compressors according to the current embodiment. Fig. 6 is a schematic view illustrating a control cycle for restarting compressors that are stopped all, according to the current embodiment.

Referring to Figs. 4 to 6, when an operation command for the air conditioner is input, the compressing unit 110 operates. At this point, the number of operating ones among the compressors 111 and 112 varies according to an indoor load.

For example, only the first compressor 111 may operate under a small indoor load, and the first and second compressors 111 and 112 may operate under a great indoor load. In a state where the compressors 111 and 112 operate, when the indoor load decreases, the second compressor 112, or the first and second compressors 111 and 112 are stopped in operation 31.

In operation S2, it is determined whether an operation condition of the stopped compressor is satisfied. In the operation condition, a current indoor load is greater than an indoor load of a compressor-stopped state. At this point, the operation condition may be varied with the number of compressors or the number of indoor devices.

If the operation condition of the stopped compressor is satisfied, the bypass valve corresponding to the stopped compressor is opened in operation S3. In addition, the first valve 172 is opened, and the excessive cooling valve 164 is closed. For example, referring to Fig. 5, when the second compressor 112 is stopped in a state where the first and second compressors 111 and 112 operate, the second bypass valve 185 is opened. Then, the second compressor 112 communicates with the accumulator 135.

When the compressors 111 and 112 are stopped all as illustrated in Fig. 6, the first and second bypass valves 183 and 185 are opened. In the current embodiment, even though the operation conditions of a part of stopped compressors are satisfied, the bypass valves corresponding to the other stopped compressors are opened as illustrated in Fig. 6. That is, in a state where compressors (e.g., the first and second compressors 111 and 112) are stopped, when the operation condition of a part (e.g., the first compressor 111) of the compressors is satisfied, the pressure of a compressor (e.g., the second compressor 112), the operation condition of which is not satisfied, is decreased in advance, so as to decrease preparation time for starting to operate later.

The stopped compressor is in a high pressure state, and the accumulator 135 is in a low pressure state. Thus, when the bypass valve corresponding to the stopped compressor is opened, the inner pressure of the stopped compressor is decreased. That is, the difference between high and low pressures of the stopped compressor is decreased.

After the bypass valve corresponding to the stopped compressor is opened, it is determined in operation S4 whether an operation start condition of the stopped compressor is satisfied. The operation condition of a compressor is used to determine whether an operation of the compressor is needed according to the increase of an indoor load, and the operation start condition of a compressor is used to determine when the compressor starts to operate.

When the operation start condition of a stopped compressor is satisfied, the difference between high and low pressures of the stopped compressor is equal to or lower than the reference pressure. As described above, high pressure of a stopped compressor may be sensed by the high pressure sensor 117, and lower pressure thereof may be sensed by the low pressure sensor 118.

If the operation start condition of the stopped compressor is satisfied in operation S4, the bypass valve corresponding to the stopped compressor is closed. In operation S6, the stopped compressor starts to operate.

According to the current embodiment, when a part of compressors are stopped, the stopped compressors can start to operate in a state where operations of the operating compressors are maintained, thereby preventing degradation of indoor air conditioning performance.

In addition, in a state where compressors are stopped with other compressors operated, bypass valves corresponding to the stopped compressors are opened to decrease the pressure of the stopped compressors, so as to decrease preparation time for starting to operate later.

In addition, a bypass tube provides not only a passage for injecting refrigerant, but also a passage for providing pressure equilibrium to start a compressor, thereby simplifying a refrigerant cycle and reducing manufacturing costs.

Although the normal cooling mode is exemplified as an operation mode of the air conditioner according to the current embodiment, the normal heating mode may be exemplified without departing from the spirit and scope of the present invention. That is, the air conditioner may be switched from the normal heating mode to the injection mode or the refrigerant bypass mode.

The excessive cooling unit according to the current embodiment may be removed. Even in this case, a tube structure and a control method for restarting a stopped compressor are the same as those in the above description. However, in this case, the first refrigerant tube 170 functions as the common tube 180.

In addition, in this case, the first and second bypass tubes 182 and 184 may communicate with a specific one of the compressing chambers, that is, with a compressing chamber finally performing a compression operation, or with a compressing chamber before the compressing chamber finally performing a compression operation.

When the compressor is not a multi-stage compressor, the first and second bypass tubes 182 and 184 may communicate with one compressing chamber. Alternatively, the first and second bypass tubes 182 and 184 may communicate with the discharge tube of the compressor.

Even though all the elements of the embodiments are coupled into one or operated in the combined state, the present disclosure is not limited to such an embodiment. That is, all the elements may be selectively combined with each other without departing the scope of the invention. Furthermore, when it is described that one comprises (or includes or has) some elements, it should be understood that it may comprise (or include or has) only those elements, or it may comprise (or include or have) other elements as well as those elements if there is no specific limitation. Unless otherwise specifically defined herein, all terms including technical or scientific terms are to be given meanings understood by those skilled in the art. Like terms defined in dictionaries, generally used terms needs to be construed as meaning used in technical contexts and are not construed as ideal or excessively formal meanings unless otherwise clearly defined herein.

Although embodiments have been described with reference to a number of illustrative embodiments thereof, it will be understood by those skilled in the art that various changes in form and details may be made therein without departing from the scope of the invention as defined by the appended claims. Therefore, the preferred embodiments should be considered in descriptive sense only and not for purposes of limitation, and also the technical scope of the invention is not limited to the embodiments. Furthermore, the invention is defined not by the detailed description of the invention but by the appended claims, and all differences within the scope will be construed as being comprised in the present disclosure.

## Claims

1. An air conditioner comprising an indoor device (20) and an outdoor device (10),
wherein the outdoor device (10) comprises:
a plurality of compressors (111, 112);
an accumulator (135) connected to an introduction side of the plurality of compressors (111, 112);
an outdoor heat exchanger (130) connected to the plurality of compressors (111, 112);
an excessive cooler (160) connected to the outdoor heat exchanger (130);
a first refrigerant tube (170) communicating with the excessive cooler (160) and the accumulator (135);
a plurality of bypass tubes (182, 184) respectively connected to the compressors and the first refrigerant tube (170); and
a plurality of bypass valves (183, 185) provided to the bypass tubes (182, 184), respectively,
wherein, in a state in which at least one of the plurality of compressors (111, 112) is stopped, at least one bypass valve, of the plurality of bypass valves (183,185), corresponding to the at least one stopped compressor is configured to be opened.

2. The air conditioner according to claim 1, wherein the bypass tubes (182, 184) are in communication with introduction sides of the compressors (111, 112).

3. The air conditioner according to claim 1 or 2, wherein after the bypass valve corresponding to the stopped compressor is opened, when an operation start condition of the stopped compressor is satisfied, the opened bypass valve is configured to be closed, and the stopped compressor is configured to start to operate.

4. The air conditioner according to claim 3, wherein, in the operation start condition, a difference between high and lower pressures of the stopped compressor is equal to or lower than a reference pressure.

5. The air conditioner according to any of claims 1 to 4, wherein, in a state where at least one of the plurality of compressors (111, 112) is stopped during the operations of the compressors, the operations of the operating compressors are maintained, and the bypass valve corresponding to the stopped compressor is opened.

6. The air conditioner according to any of claims 1 to 5, wherein each of the compressors (111, 112) comprises a plurality of compressing chambers for a multi-stage compression operation, and
each of the bypass tubes (182, 184) communicates with the compressing chamber receiving refrigerant compressed one or more times.

7. The air conditioner according to any of claims 1 to 6, wherein:
the accumulator (135) is configured for introducing vapor refrigerant to the compressors (111, 112); and
refrigerant discharged to each of the bypass tubes (182, 184) is introduced to the accumulator (135) through the first refrigerant tube (170).

8. The air conditioner according to claim 7, further comprising a common tube connected to the bypass tubes,
wherein the common tube (180) is connected to the first refrigerant tube (170).

9. The air conditioner according to any of claims 1 to 8, further comprising an excessive cooling unit for excessively cooling refrigerant,
wherein the excessive cooling unit including the excessive cooler (160) is in communication with the bypass tubes (182, 184).

10. The air conditioner according to claim 9, further comprising: the first refrigerant tube communicating with each of the compressors (111, 112); and a first valve (172) provided to the first refrigerant tube, wherein, a position of the first valve (172) is configured to be closed so as to allow refrigerant to flow from the excessive cooler (160) to one or more operating compressors of the plurality of compressors (111, 112) through respective bypass tubes of the plurality of bypass tubes (182, 184) when a difference between high and low pressures of the operating compressing unit is equal to or higher than a reference pressure, or a compression ratio of the high pressure to the lower pressure is equal to or smaller than a reference compression ratio.

11. The air conditioner according to claim 10, wherein, when the refrigerant is introduced from the excessive cooling unit (160) to the operating compressor, the valve provided to the refrigerant tube is configured to be closed.

## Patentansprüche

1. Klimaanlage aufweisend eine Innenraumvorrichtung (20) und eine Außenraumvorrichtung (10),
wobei die Außenraumvorrichtung (10) aufweist:
mehrere Verdichter (111, 112);
einen Akkumulator (135), der mit einer Einspeisungsseite der mehreren Verdichter (111, 112) verbunden ist;
einen Außenraum-Wärmetauscher (130), der mit den mehreren Verdichtern (111, 112) verbunden ist;
einen Überkühler (160), der mit dem Außenraum-Wärmetauscher (130) verbunden ist;
ein erstes Kältemittelrohr (170), das mit dem Überkühler (160) und dem Akkumulator (135) kommuniziert;
mehrere Umgehungsrohre (182, 184), die jeweils mit den Verdichtern und dem ersten Kältemittelrohr (170) verbunden sind; und
mehrere Umgehungsventile (183, 185), die jeweils den Umgehungsrohren (182, 184) bereitgestellt sind,
wobei in einem Zustand, in dem mindestens einer der mehreren Verdichter (111, 112) gestoppt worden ist, mindestens ein Umgehungsventil der mehreren Umgehungsventile (183, 185), das dem mindestens einen gestoppten Verdichter zugeordnet ist, konfiguriert ist, geöffnet zu werden.

2. Klimaanlage nach Anspruch 1, wobei die Umgehungsrohre (182, 184) in Kommunikation mit Einspeisungsseiten der Verdichter (111, 112) sind.

3. Klimaanlage nach Anspruch 1 oder 2, wobei nach dem Öffnen des dem gestoppten Verdichter zugeordneten Umgehungsventils, wenn eine Betriebsstartbedingung des gestoppten Verdichters erfüllt ist, das geöffnete Umgehungsventil konfiguriert ist, geschlossen zu werden und der gestoppte Verdichter konfiguriert ist, seinen Betrieb zu starten.

4. Klimaanlage nach Anspruch 3, wobei in der Betriebsstartbedingung eine Differenz zwischen einem hohen und einem niedrigeren Druck des gestoppten Verdichters gleich oder kleiner als ein Referenzdruck ist.

5. Klimaanlage nach einem der Ansprüche 1 bis 4, wobei in einem Zustand, in dem während der Betriebe der Verdichter mindestens einer der mehreren Verdichter (111, 112) gestoppt worden ist, die Betriebe der in Betrieb befindlichen Verdichter aufrechterhalten werden und das dem gestoppten Verdichter zugeordnete Umgehungsventil geöffnet wird.

6. Klimaanlage nach einem der Ansprüche 1 bis 5, wobei jeder der Verdichter (111, 112) mehrere Verdichtungskammern für einen mehrstufigen Verdichtungsbetrieb aufweist, und
jedes der Umgehungsrohre (182, 184) mit der Verdichtungskammer kommuniziert, die einmal oder mehrmals verdichtetes Kältemittel empfängt.

7. Klimaanlage nach einem der Ansprüche 1 bis 6, wobei:
der Akkumulator (135) konfiguriert ist, Dampfkältemittel in die Verdichter (111, 112) einzuspeisen; und
Kältemittel, das zu jedem der Umgehungsrohre (182, 184) ausgespeist worden ist, durch das erste Kältemittelrohr (170) in den Akkumulator (135) eingespeist wird.

8. Klimaanlage nach Anspruch 7, ferner aufweisend ein mit den Umgehungsrohren verbundenes gemeinsames Rohr, wobei das gemeinsame Rohr (180) mit dem ersten Kältemittelrohr (170) verbunden ist.

9. Klimaanlage nach einem der Ansprüche 1 bis 8, ferner aufweisend eine Überkühleinheit zum Überkühlen von Kältemittel, wobei die Überkühleinheit, die den Überkühler (160) aufweist, in Kommunikation mit den Umgehungsrohren (182, 184) ist.

10. Klimaanlage nach Anspruch 9, ferner aufweisend:
das erste Kältemittelrohr, das mit jedem der Verdichter (111, 112) kommuniziert; und ein dem ersten Kältemittelrohr bereitgestelltes erstes Ventil (172),
wobei eine Position des ersten Ventils (172) konfiguriert ist, geschlossen zu werden, um zu erlauben, dass Kältemittel aus dem Überkühler (160) durch jeweilige Umgehungsrohre der mehreren Umgehungsrohre (182, 184) zu einem oder mehreren in Betrieb befindlichen Verdichtem der mehreren Verdichter (111, 112) strömt, wenn eine Differenz zwischen einem hohen und einem niedrigen Druck der in Betrieb befindlichen Verdichtungseinheit gleich oder höher als ein Referenzdruck ist, oder ein Verdichtungsverhältnis des hohen Drucks zu dem niedrigeren Druck gleich oder kleiner als ein Referenzverdichtungsverhältnis ist.

11. Klimaanlage nach Anspruch 10, wobei, wenn das Kältemittel aus der Überkühleinheit (160) in den in Betrieb befindlichen Verdichter eingespeist wird, das dem Kältemittelrohr bereitgestellte Ventil konfiguriert ist, geschlossen zu werden.

## Revendications

1. Climatiseur comprenant un dispositif intérieur (20) et un dispositif extérieur (10),
dans lequel le dispositif extérieur (10) comprend :
une pluralité de compresseurs (111, 112) ;
un accumulateur (135) raccordé à un côté d'introduction de la pluralité de compresseurs (111, 112) ;
un échangeur de chaleur extérieur (130) raccordé à la pluralité de compresseurs (111, 112) ;
un refroidisseur excessif (160) raccordé à l'échangeur de chaleur extérieur (130) ;
un premier tube de réfrigérant (170) communiquant avec le refroidisseur excessif (160) et l'accumulateur (135) ;
une pluralité de tubes de dérivation (182, 184) respectivement raccordés aux compresseurs et au premier tube de réfrigérant (170) ; et
une pluralité de valves de dérivation (183, 185) prévues sur les tubes de dérivation (182, 184), respectivement,
dans lequel, dans un état dans lequel au moins l'un de la pluralité de compresseurs (111, 112) est arrêté, au moins une valve de dérivation de la pluralité de valves de dérivation (183, 185) correspondant au au moins un compresseur arrêté, est configurée pour être ouverte.

2. Climatiseur selon la revendication 1, dans lequel les tubes de dérivation (182, 184) sont en communication avec les côtés d'introduction des compresseurs (111, 112).

3. Climatiseur selon la revendication 1 ou 2, dans lequel après que la valve de dérivation correspondant au compresseur arrêté est ouverte, lorsqu'une condition de début de fonctionnement du compresseur arrêté est satisfaite, la valve de dérivation ouverte est configurée pour être fermée, et le compresseur arrêté est configuré pour commencer à fonctionner.

4. Climatiseur selon la revendication 3, dans lequel, dans la condition de début de fonctionnement, une différence entre la haute pression et la basse pression du compresseur arrêté est égale ou inférieure à une pression de référence.

5. Climatiseur selon l'une quelconque des revendications 1 à 4, dans lequel, dans un état dans lequel au moins l'un de la pluralité de compresseurs (111, 112) est arrêté pendant les fonctionnements des compresseurs, les fonctionnements des compresseurs opérationnels sont maintenus, et la valve de dérivation correspondant au compresseur arrêté est ouverte.

6. Climatiseur selon l'une quelconque des revendications 1 à 5, dans lequel chacun des compresseurs (111, 112) comprend une pluralité de chambres de compression pour une opération de compression à plusieurs étages, et
chacun des tubes de dérivation (182, 184) communique avec la chambre de compression recevant le réfrigérant comprimé une ou plusieurs fois.

7. Climatiseur selon l'une quelconque des revendications 1 à 6, dans lequel :
l'accumulateur (135) est configuré pour introduire du réfrigérant en phase vapeur dans les compresseurs (111, 112) ; et
le réfrigérant déchargé de chacun des tubes de dérivation (182, 184) est introduit dans l'accumulateur (135) par le premier tube de réfrigérant (170).

8. Climatiseur selon la revendication 7, comprenant en outre un tube commun raccordé aux tubes de dérivation,
dans lequel le tube commun (180) est raccordé au premier tube de réfrigérant (170).

9. Climatiseur selon l'une quelconque des revendications 1 à 8, comprenant en outre une unité de refroidissement excessif pour refroidir le réfrigérant de manière excessive,
dans lequel l'unité de refroidissement excessif comprenant le refroidisseur excessif (160) est en communication avec les tubes de dérivation (182, 184).

10. Climatiseur selon la revendication 9, comprenant en outre : le premier tube de réfrigérant communiquant avec chacun des compresseurs (111, 112) ; et une première valve (172) prévue sur le premier tube de réfrigérant,
dans lequel une position de la première valve (172) est configurée pour être fermée afin de permettre l'écoulement du réfrigérant du refroidisseur excessif (160) jusqu'aux un ou plusieurs compresseurs opérationnels de la pluralité de compresseurs (111, 112) par les tubes de dérivation respectifs de la pluralité de tubes de dérivation (182, 184) lorsqu'une différence entre la haute pression et la basse pression de l'unité de compression opérationnelle est égale ou supérieure à une pression de référence, ou un rapport de compression de la haute pression sur la basse pression est égal ou inférieur à un rapport de compression de référence.

11. Climatiseur selon la revendication 10, dans lequel lorsque le réfrigérant est introduit de l'unité de refroidissement excessif (160) au compresseur opérationnel, la valve prévue sur le tube de réfrigérant est configurée pour être fermée.
